# EUROPEAN PATENT APPLICATION

(11) **EP 4 592 843 A1**
(43) Date of publication of application: **30.07.2025**
(21) Application number: 25151476.6
(22) Date of filing: 13.01.2025
(51) Int. Cl.: G06F 9/50, G06F 9/52

(54) **NON-LOCKING RECOVERY OF EPOCH-BASED MEMORY RESOURCES**

(30) Priority: 24.01.2024 US 202418421070
(71) Applicant: Microsoft Technology Licensing, LLC, Redmond, WA 98052 (US)
(72) Inventor: Jowett, Alan Thomas Gavin, Redmond (US)
(74) Representative: CMS Cameron McKenna Nabarro Olswang LLP

(57) **Abstract**

Systems and methods are provided for implementing non-locking recovery of epoch-based memory resources. A plurality of CPUs, having executed a thread(s) with each thread starting at an epoch value among a plurality of monotonically increasing epoch values, may perform sets of tasks, each set being performed by each CPU either in sequence or in parallel. The first set of tasks includes each CPU computing its minimum epoch value of all active threads running on it and sending the computed minimum epoch value to at least one other CPU. At least one CPU identifies a global minimum epoch value based at least in part on the computed minimum epoch values computed by each CPU. The second set of tasks includes each CPU initiating a release process for memory resources associated with epoch values below the global minimum epoch value and forwarding the global minimum epoch value to another CPU(s).

## Description

### BACKGROUND

Memory resources are typically tied to threads running on central processing units ("CPUs"). Even when no active threads are running on a CPU, memory resources are still tied to it, and must be released or recovered before they can be used by other CPUs or other systems. It is with respect to this general technical environment to which aspects of the present disclosure are directed. In addition, although relatively specific problems have been discussed, it should be understood that the examples should not be limited to solving the specific problems identified in the background.

### SUMMARY

This summary is provided to introduce a selection of concepts in a simplified form that are further described below in the detailed description section. This summary is not intended to identify key features or essential features of the claimed subject matter, nor is it intended as an aid in determining the scope of the claimed subject matter.

The currently disclosed technology, among other things, provides for non-locking recovery of memory resources. In some examples, non-locking recovery may be applicable to epoch mechanism for reclaiming memory once the memory is no longer in use. A plurality of CPUs, having executed at least one thread with each thread starting at a first epoch value among a plurality of monotonically increasing epoch values, may perform two loops of tasks, each loop of tasks being performed by each CPU among the plurality of CPUs either in sequence or in parallel. The first loop of tasks includes a propose-release-epoch series of tasks or a series of local minimum epoch value computations, while the second loop of tasks includes a commit-release-epoch series of tasks or a series of local memory resource recovery tasks. The first loop of tasks includes each CPU computing its minimum epoch value of all active threads running on it and sending the computed minimum epoch value to at least one other CPU among the plurality of CPUs. At least one of the plurality of CPUs is used to identify a global minimum epoch value based at least in part on the computed minimum epoch values computed by each of the CPUs. The second loop of tasks includes each CPU initiating a release process for memory resources associated with epoch values below the global minimum epoch value and forwarding the global minimum epoch value to the at least one other CPU among the plurality of CPUs.

The details of one or more aspects are set forth in the accompanying drawings and description below. Other features and advantages will be apparent from a reading of the following detailed description and a review of the associated drawings. It is to be understood that the following detailed description is explanatory only and is not restrictive of the invention as claimed.

### BRIEF DESCRIPTION OF THE DRAWINGS

A further understanding of the nature and advantages of particular embodiments may be realized by reference to the remaining portions of the specification and the drawings, which are incorporated in and constitute a part of this disclosure.
Fig. 1 depicts an example system for implementing non-locking recovery of epoch-based memory resources.
Fig. 2 depicts an example system illustrating relationships among threads, epochs, and memory resources of an epoch-based memory system when implementing non-locking recovery of epoch-based memory resources.
Figs. 3A-3L depict an example data flow for implementing non-locking recovery of epoch-based memory resources.
Fig. 4 depicts an example method for implementing non-locking recovery of epoch-based memory resources.
Figs. 5A and 5B depict another example method for implementing non-locking recovery of epoch-based memory resources.
Fig. 6 depicts yet another example method for implementing non-locking recovery of epoch-based memory resources.
Fig. 7 depict a block diagram illustrating example physical components of a computing device with which aspects of the technology may be practiced.

### DETAILED DESCRIPTION OF CERTAIN EMBODIMENTS

Releasing or recovering epoch-based memory resources typically requires locking operations on CPUs in a cluster of CPUs during operations involving threads running the CPUs. Such locking operations, including a lock or spinlock, provides mutual exclusion to particular portions of memory or particular memory resources, and involves stalling other operations running the CPUs, which results in computational delays or CPU time costs. The lock or spinlock provides memory safety, but at a high cost because other CPUs must wait for that lock to be acquired to perform tasks. Epoch Enter APIs and Epoch Exit APIs denote boundaries in epoch-based memory recovery code where epoch-protected resources are used. Most of the time, there is no memory allocation or memory free functionalities occurring during this code. Operations are classified as readers (or non-modifying) or writers (or modifying), with the expected behavior being that the majority of operations are read. In practice, however, Epoch-Enter APIs and Epoch-Exit APIs can be called with very high frequency, e.g., tens or hundreds of millions of times a second. Acquiring and releasing a lock every time a CPU enters or exits an epoch incurs a time cost of about 10s or 100s of nanoseconds (ns), which becomes prohibitive at the very high frequencies that these APIs are called. While the time cost per CPU can add up due to high frequencies of Epoch-Enter API calls and Epoch-Exit API calls, the time cost is compounded due to mutual exclusion, which prevents other threads on other CPUs from performing tasks at the same time. For example, when a first CPU has a single global lock for running a thread or operations in a pipeline, a second CPU would have to wait for the thread or the operations in the pipeline running on the first CPU to finish before calling an Epoch-Enter API. As the number of CPUs increases, the time the next thread will have to wait will increase as well.

The technology described herein includes a model that is a solution to the problem discussed above. The model avoids mutual exclusion and thus does not stall other threads or operations on pipelines on a CPU or other CPUs. Because there are no interlock operations, there are fewer (e.g., no) memory barriers. Entire operations can be completed without interrupting based on the flow of execution. The total cost of the epoch-enter and epoch-exit drops to around 20 ns. The model enables several possible algorithms including a read-copy-update algorithm, in which instead of having a single copy of the memory that is both read and updated, the model creates a new copy of the memory, the old copies of the memory are replaced with the new copy, and then at some point the old copies are freed or released for use by the system. Thus, instead of relying on locks, the model uses a partition state by CPU in which each CPU determines or queries its own local state, without having to acquire a lock as each CPU does not determine or query states of other CPUs, or vice versa. The CPU does not see an inconsistent version of its local state. The purpose of the locks is to ensure that any CPU that determines or queries its local state obtains a consistent view of the state, and, in some cases, the CPU obtains notification of any updates to the state of the CPU. In sum, the model covers a method for implementing a more efficient and scalable mechanism for implementing epoch-based memory management. Epoch-based memory management uses a non-decreasing epoch to determine when it is safe to reclaim memory resources. Contrary to existing implementations that rely on interlocked operations or spinlocks to protect state when computing the next epoch to retire, the model uses a message passing mechanism to achieve a consensus among CPUs about the memory resources associated with the next epoch to be reclaimed. Epoch driven memory management has a fixed cost associated with entering and exiting a protected region of code. Accessing memory regions protected by Epoch can be performed without the need to perform interlocked operations, with the net effect being a reduction in interlocked operations if on average each thread accesses more than one protected memory region. The cost of entering and exiting a protected region of code is comparable to a typical synchronization operation (such as an acquisition of a push-lock or spinlock).

Various modifications and additions can be made to the embodiments discussed without departing from the scope of the disclosed techniques. For example, while the embodiments described above refer to particular features, the scope of the disclosed techniques also includes embodiments having different combinations of features and embodiments that do not include all of the above-described features.

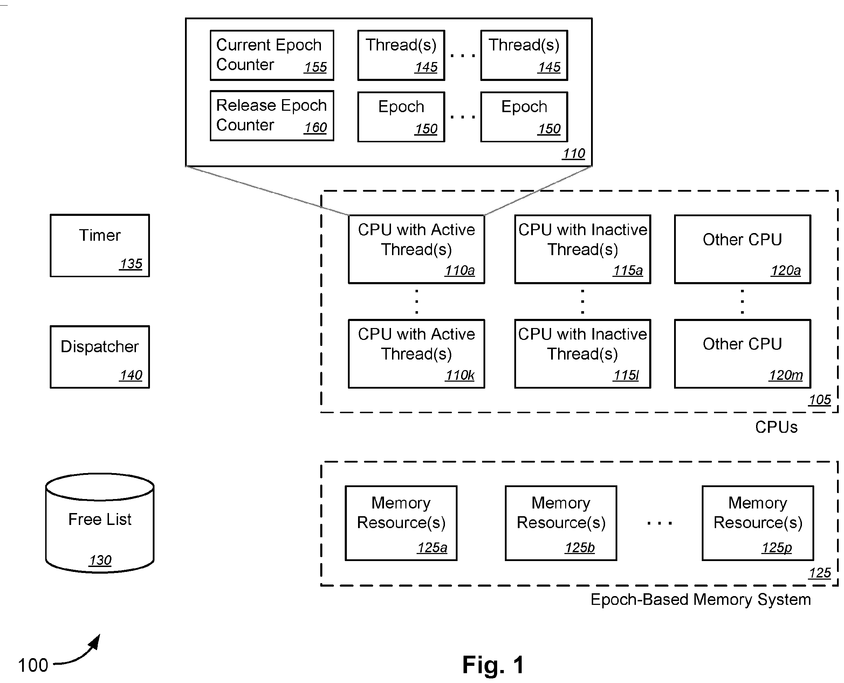

We now turn to the embodiments as illustrated by the drawings. Figs. 1-7 illustrate some of the features of a method, system, and apparatus for implementing memory resource recovery, and, more particularly, to methods, systems, and apparatuses for implementing non-locking recovery of epoch-based memory resources, as referred to above. The methods, systems, and apparatuses illustrated by Figs. 1-7 refer to examples of different embodiments that include various components and steps, which can be considered alternatives or which can be used in conjunction with one another in the various embodiments. The description of the illustrated methods, systems, and apparatuses shown in Figs. 1-7 is provided for purposes of illustration and should not be considered to limit the scope of the different embodiments.

Fig. 1 depicts an example system 100 for implementing non-locking recovery of epoch-based memory resources. System 100 includes a plurality of CPUs 105, including a plurality of CPUs with active threads 110a-110k (collectively, "CPUs 110"), a plurality of CPUs with inactive threads 115a-115l (collectively, "CPUs 115"), and a plurality of other CPUs 120a-120m (collectively, "CPUs 120"). System 100 further includes an epoch-based memory system 125, including memory resources 125a-125p, a database 130 containing a free list, a system timer 135, and a dispatcher 140. Herein, *k, l, m,* and *p* are non-negative integer numbers that may be either all the same as each other, all different from each other, or some combination of same and different (e.g., one set of two or more having the same values with the others having different values, a plurality of sets of two or more having the same value with the others having different values).

In examples, each CPU 110 executes one or more threads 145, each thread 145 associated with or starting at a corresponding one of one or more epochs 150. Each CPU 110 further includes a current epoch counter 155 and a release epoch counter 160. The current epoch counter 155 tracks a current epoch counter value to correspond to a global maximum epoch value among the plurality of CPUs with active threads 110a-110k. The release epoch counter 160, on the other hand, tracks a release epoch counter value to correspond to one of an global minimum epoch value of all active threads running on all of the plurality of CPUs 110a-110k or an epoch value that is one less than the global minimum epoch value. An epoch, as used herein, refers to a non-descending counter or counter value corresponding to a period associated with access to memory resources of the epoch-based memory system and/or associated with start of a thread. In examples, epoch values increase based on one of timer activation, specific events, or when memory is reclaimed. A thread, as used herein, refers to a component of a process, and in some cases a smallest sequence of programmed instructions that can be independently managed by a scheduler, timer, or dispatcher of an operating system (" OS"). In some examples, a thread refers to a sequence of events that are occurring on a CPU. Although multiple threads can be associated with a CPU, only one thread can be active at a time. A scheduler (e.g., timer 135 and/or dispatcher 140) is used to switch between threads running on a CPU. Threads can also migrate between CPUs.

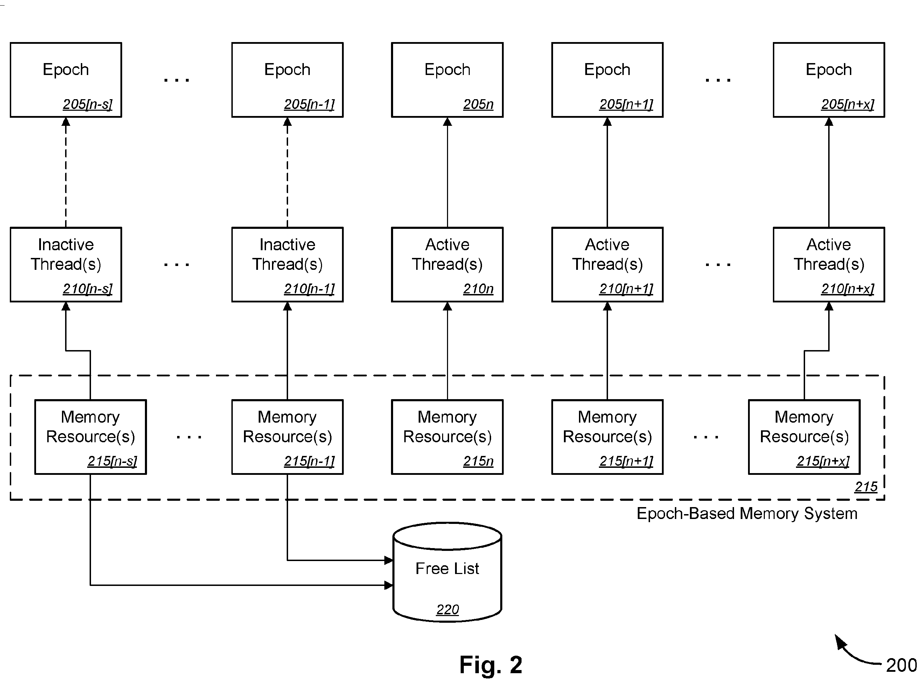

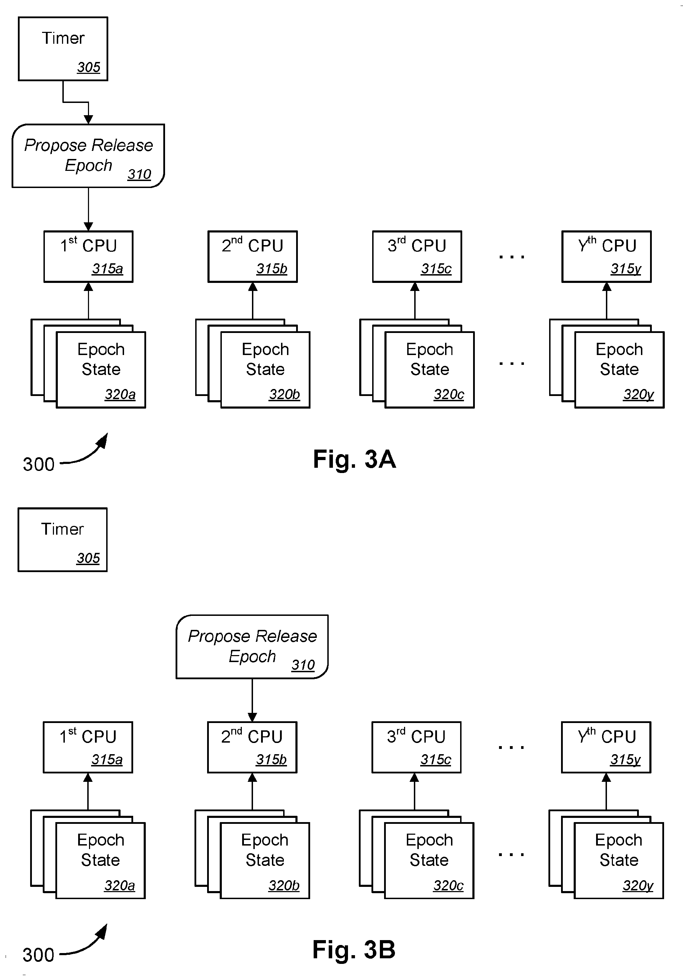

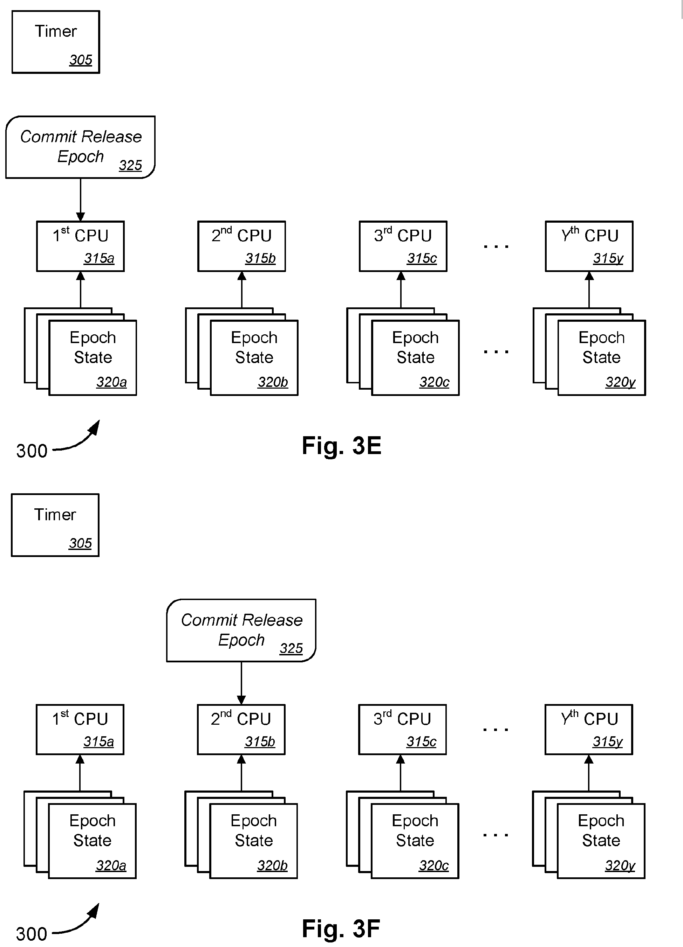

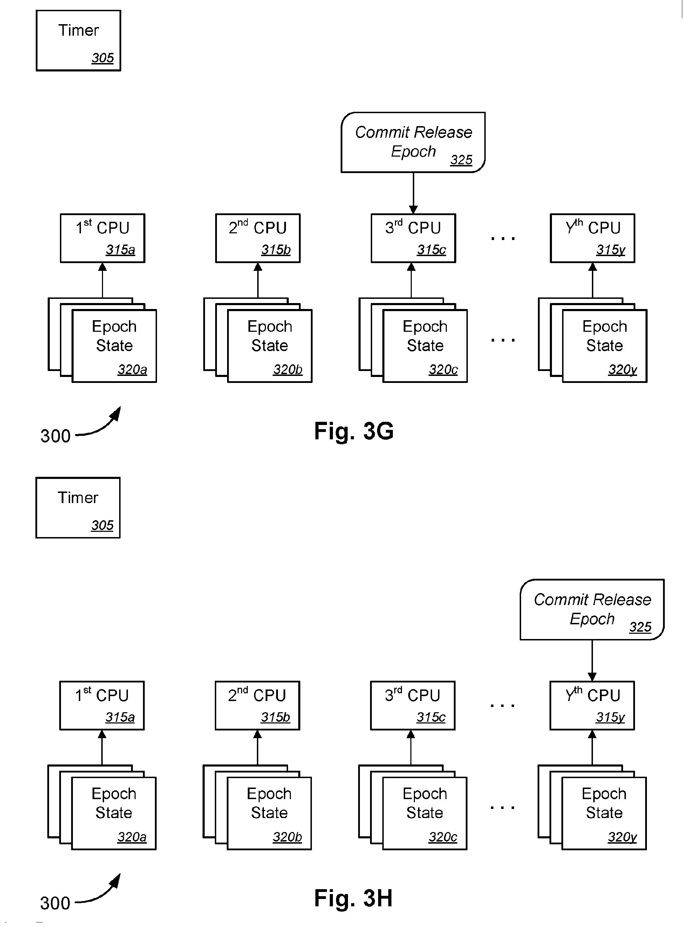

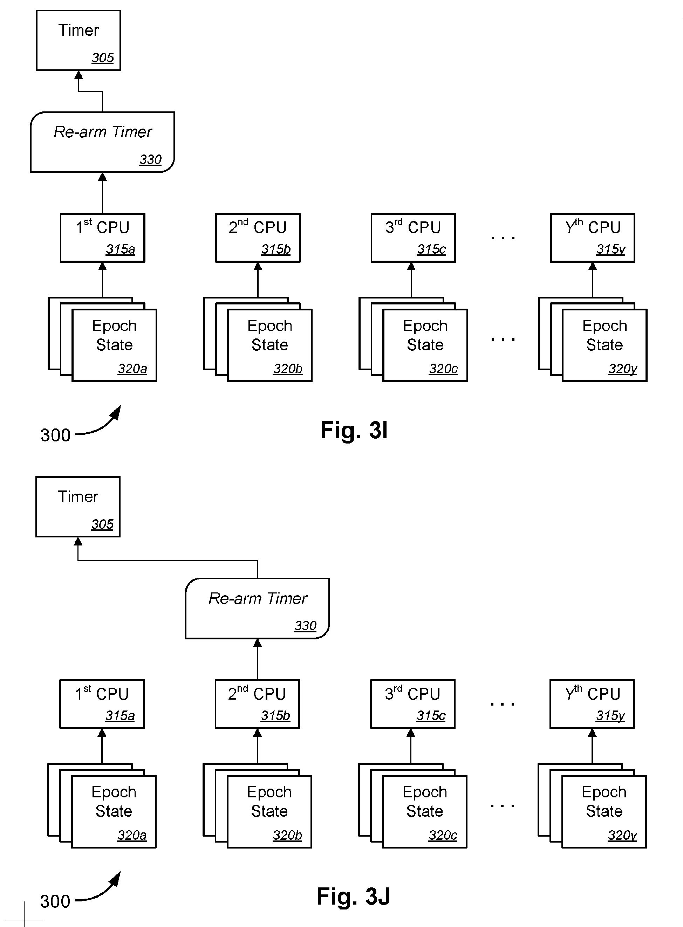

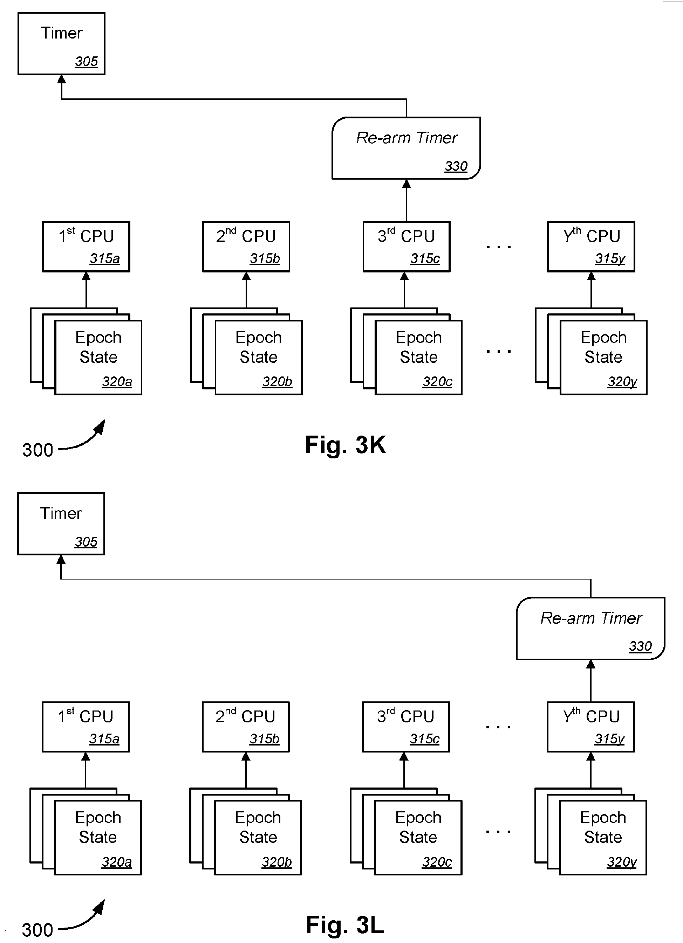

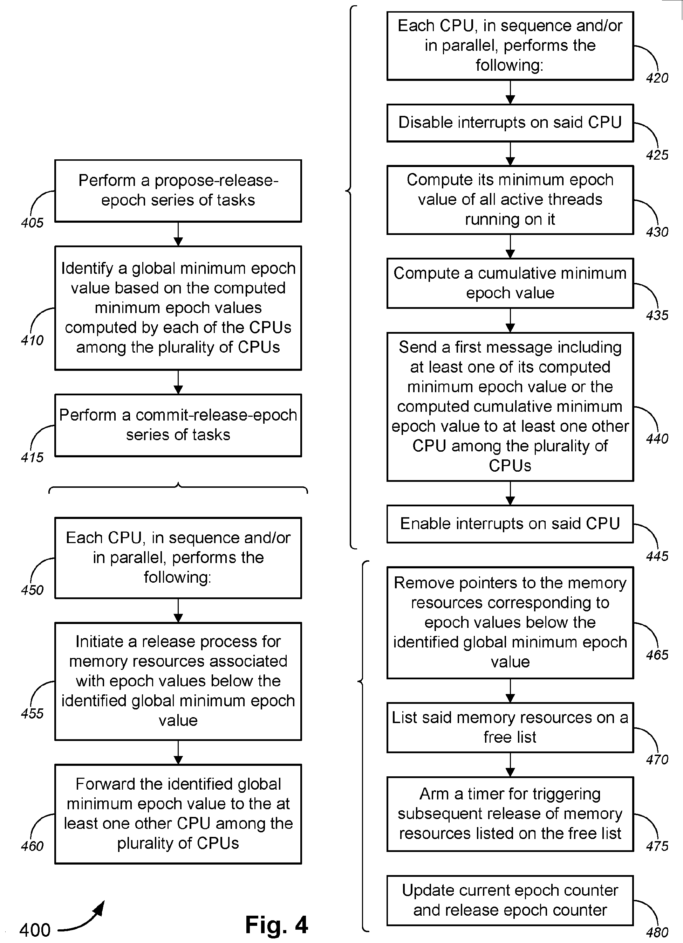

In operation, CPUs 105, 110a-110k, 115a-115l, and/or 120a-120m, system timer 135, and/or dispatcher 140 may perform methods for implementing non-locking recovery of epoch-based memory resources, as described in detail with respect to Figs. 2-6. For example, example system 200 as described below with respect to Fig. 2 shows the relationships between active and inactive threads, epochs, memory resources, and a free list. Example data flow 300 as described below with respect to Figs. 3A-3L shows loops of operation (including one loop with a propose-release-epoch series of tasks or a series of local minimum epoch value computations and another loop with a commit-release-epoch series of tasks or a series of local memory resource recovery tasks) through a sequence of first through last CPUs among a plurality of CPUs with active threads (e.g., CPUs 110a-110k). Although not shown, two or more CPUs among the plurality of CPUs with active threads (e.g., CPUs 1 10a-1 10k) may concurrently perform the loops of operation one loop after the other. Figs. 4-6 depict various methods for implementing non-locking recovery of epoch-based memory resources (e.g., memory resources 125a-125p of epoch-based memory system 125).

Fig. 2 depicts an example system 200 illustrating relationships among threads, epochs, and memory resources of an epoch-based memory system when implementing non-locking recovery of epoch-based memory resources. In some embodiments, epochs 205[n-s] through 205[n-1], 205n, and 205[n+1] through 205[n+x], inactive threads 210[n-s] through 210[n-1] and active threads 210n and 210[n+1] through 210[n+x], epoch-based memory system 215, memory resources 215[n-s] through 215[n-1], 215n, and 215[n+1] through 215[n+x], and free list database 220 containing a free list of Fig. 2 may be similar, if not identical, to the epochs 150, threads 145, epoch-based memory system 125, memory resources 125a-125p, and database 130 containing free list, respectively, of system 100 of Fig. 1, and the description of these components of system 100 of Fig. 1 are similarly applicable to the corresponding components of Fig. 2.

With reference to example system 200, one or more active threads 210n may be associated with, or may be executed (e.g., by a CPU, such as CPUs 110a-110k of Fig. 1) starting at epoch or epoch value 205n among a plurality of monotonically increasing epochs or epoch values for an epoch-based memory system 215. One or more active threads 210[n+1] through one or more active threads 210[n+x] may likewise be associated with, or may be executed (e.g., by one or more CPUs, such as CPUs 110a-110k of Fig. 1) starting at corresponding epoch or epoch value 205 [n+1] through epoch or epoch value 205 [n+x] among the plurality of monotonically increasing epochs or epoch values. Memory resources 215n among memory resources of epoch-based memory system 215 are used for the one or more active threads 210n, while memory resources 215[n+1] through 215[n+x] of epoch-based memory system 215 are used for the one or more active threads 210[n+1] through 210[n+x].

One or more inactive threads 210[n-s] through 210[n-1] may be associated with, or may be executed (e.g., by one or more CPUs, such as CPUs 110a-110k and/or 115a-115l) that started at corresponding one or more epoch or epoch values 205[n-s] through 205[n-1] among the plurality of monotonically increasing epochs or epoch values. Memory resources 215[n-s] through 215[n-1] of epoch-based memory system 215 are used for the one or more inactive threads 210[n-s] through 210[n-1]. By releasing or recovery of memory resources 215[n-s] through 215[n-1] from these inactive threads 210[n-s] through 210[n-1], these no longer used memory resources 215[n-s] through 215[n-1] may be used by other systems and system processes (e.g., by active threads and/or other CPUs or systems). Released or recovered memory resources are listed in the free list database 220, prior to being reallocated or reassigned to other systems and/or system processes. An example process for releasing or recovering memory resources is described below with respect to Figs. 3A-3L. Herein, *n, s,* and *x* are non-negative integer numbers that, along with non-negative integer numbers *k, l, m,* and *p,* may be either all the same as each other, all different from each other, or some combination of same and different (e.g., one set of two or more having the same values with the others having different values, a plurality of sets of two or more having the same value with the others having different values).

Figs. 3A-3L depict an example data flow 300 for implementing non-locking recovery of epoch-based memory resources. In some embodiments, epoch states 320a-320y correspond to states of epochs or epoch values (e.g., epochs or epoch values 150, 205[n-s] through 205[n-1], 205n, and 205[n+1] through 205[n+x] of Figs. 1 and 2). According to some embodiments, timer 305 and first through *Y*^{th} CPUs 315a-315y of Fig. 2 may be similar, if not identical, to the timer 135 and CPUs 110a-110k, respectively, of system 100 of Fig. 1, and the description of these components of system 100 of Fig. 1 are similarly applicable to the corresponding components of Fig. 2.

With reference to Fig. 3A, timer 305 may initiate a propose-release-epoch series of tasks 310 (also referred to herein as "a series of local minimum epoch value computations"), by passing instructions for the same to a sequence of CPUs from the first through *Y*^{th} CPUs 315a-315y. Performing the propose-release-epoch series of tasks 310 includes disabling interrupts on the first CPU 315a. In examples, disabling interrupts on the first CPU 315a is independent of, and avoids locking or interlocking, other CPUs 315b-315y in the sequence of CPUs from performing their own tasks. In some examples, disabling interrupts on each CPU includes disabling interrupts used by a dispatcher portion of a kernel (e.g., dispatcher 140 of Fig. 1) that switches between threads for the first CPU 315a. Performing the propose-release-epoch series of tasks 310 further includes the first CPU 315a computing its minimum epoch value of all active threads running on it, in some cases, by querying epoch states 320a of threads running on the first CPU 315a. Performing the propose-release-epoch series of tasks 310 further includes the first CPU 315a sending, to a second CPU 315b among the sequence of CPUs, a message including the computed minimum epoch value based on the queried epoch states 320a. Performing the propose-release-epoch series of tasks 310 further includes the first CPU 315a enabling interrupts.

Referring to Fig. 3B, performing the propose-release-epoch series of tasks 310 further includes the disabling interrupts on the second CPU 315b. Performing the propose-release-epoch series of tasks 310 further includes the second CPU 315b computing its minimum epoch value of all active threads running on it, in some cases, by querying epoch states 320b of threads running on the second CPU 315b. In examples, performing the propose-release-epoch series of tasks 310 further includes the second CPU 315b computing a cumulative minimum epoch value, in some cases, based on its computed minimum epoch value and based on the computed minimum epoch value corresponding to the preceding CPU in the sequence of CPUs (in this case, the first CPU 315a). Performing the propose-release-epoch series of tasks 310 further includes the second CPU 315b sending, to a third CPU 315c among the sequence of CPUs, a message including at least one of the computed minimum epoch value based on the queried epoch states 320b or the cumulative minimum epoch value. Performing the propose-release-epoch series of tasks 310 further includes the second CPU 315b enabling interrupts.

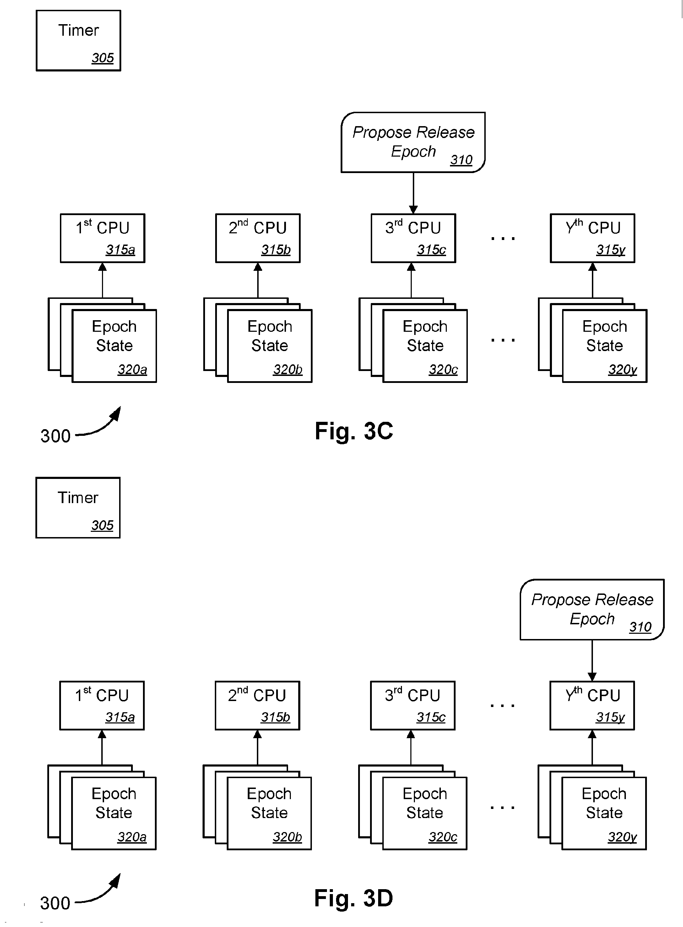

Turning to Fig. 3C, performing the propose-release-epoch series of tasks 310 further includes the disabling interrupts on the third CPU 315c. Performing the propose-release-epoch series of tasks 310 further includes the third CPU 315c computing its minimum epoch value of all active threads running on it, in some cases, by querying epoch states 320c of threads running on the third CPU 315c. In examples, performing the propose-release-epoch series of tasks 310 further includes the third CPU 315c computing a cumulative minimum epoch value, in some cases, based on its computed minimum epoch value and based on at least one of a cumulative minimum epoch value as sent in a message by a preceding CPU (in this case, the second CPU 315b) in the sequence of CPUs or the computed minimum epoch value corresponding to each preceding CPU in the sequence of CPUs (in this case, the first CPU 315a and second CPU 315b). Performing the propose-release-epoch series of tasks 310 further includes the third CPU 315c sending, to a third CPU 315c among the sequence of CPUs, a message including at least one of the computed minimum epoch value based on the queried epoch states 320c or the cumulative minimum epoch value. Performing the propose-release-epoch series of tasks 310 further includes the third CPU 315c enabling interrupts.

Performing the propose-release-epoch series of tasks 310 repeats the processes for the third CPU 315c from a fourth CPU 315d through the *Y*^{th} CPU 315y in the sequence of CPUs. With reference to Fig. 3D, performing the propose-release-epoch series of tasks 310 further includes the disabling interrupts on the Yth CPU 315y (also referred to herein as "the last CPU" in the sequence of CPUs). Performing the propose-release-epoch series of tasks 310 further includes the Yth CPU 315y computing its minimum epoch value of all active threads running on it, in some cases, by querying epoch states 320y of threads running on the Yth CPU 315y. In examples, performing the propose-release-epoch series of tasks 310 further includes the Yth CPU 315y computing a cumulative minimum epoch value or a global minimum epoch value, in some cases, based on its computed minimum epoch value and based on at least one of a cumulative minimum epoch value as sent in a message by a preceding CPU (in this case, a second-to-last CPU 315[y-1]) in the sequence of CPUs or the computed minimum epoch value corresponding to each preceding CPU in the sequence of CPUs (in this case, the first CPU 315a and the second-to-last CPU 315[y-1]). Performing the propose-release-epoch series of tasks 310 further includes the Yth CPU 315y sending, to the first CPU 315a among the sequence of CPUs, a message including the cumulative minimum epoch value or the global minimum epoch value. Performing the propose-release-epoch series of tasks 310 further includes the Yth CPU 315y enabling interrupts.

With reference to Figs. 3E-3H, data flow 300 further includes performing a commit-release-epoch series of tasks 325. Performing the commit-release-epoch series of tasks 325 includes each of the CPUs in the sequence of CPUs (in turn) initiating a release process for memory resources associated with epoch values below the global minimum epoch value, and forwarding the global minimum epoch value to the next CPU in the sequence of CPUs. In some examples, initiating the release process includes removing pointers to the memory resources corresponding to epoch values below the global minimum epoch value, and listing the memory resources on a free list. In examples, initiating the release process further includes each of the CPUs in the sequence of CPUs arming or re-arming the timer 305 for triggering subsequent release of memory resources listed on the free list (as shown Figs. 3I-3L). In some examples, initiating the release process or more generally performing the commit-release-epoch series of tasks 325 further includes each of the CPUs in the sequence of CPUs (in turn) updating a current epoch counter value to correspond to a global maximum epoch value (e.g., epoch 205[n+x] of Fig. 2) and/or updating a release epoch counter value to correspond to one of the global minimum epoch value (e.g., epoch 205n of Fig. 2) or an epoch value that is one less than the global minimum epoch value (e.g., epoch 205[n-1] of Fig. 2).

Although not shown, two or more CPUs among the plurality of CPUs with active threads (e.g., CPUs 110a-110k) may concurrently perform the loops of operation, one loop after the other. In some examples, each of the two or more CPUs concurrently performing the loops of operation may send its computed minimum epoch value and/or its computed cumulative minimum epoch value to other CPUs among the plurality of CPUs with active threads. In some cases, each of the two or more CPUs concurrently performing the loops of operation may send its computed minimum epoch value and/or its computed cumulative minimum epoch value to a collective database. Each of the plurality of CPUs has access to the computed minimum epoch value and/or the computed cumulative minimum epoch value as sent from each preceding CPU to collective database to base its computation of cumulative minimum epoch value.

In some aspects, with reference to Figs. 1-3L, the operations of the epoch-based memory recovery is performed by epoch-based memory recovery code or system. In examples, the epoch-based memory recovery code, when called by a CPU or other components of the epoch-based memory recovery system (collectively, "callers of the code"), frees, reclaims, or releases memory resources that are no longer reachable by CPUs or threads, and after it is safe to do so or after it is determined (by the epoch-based memory recovery code or system) to be safe to do so. All memory resources tracked by the epoch-based memory recovery code or system exists in one of three states: active, inactive, and reclaimed. The epoch-based memory recovery code exposes the following APIs to callers of the code: (a) Allocate API or Memory-Allocate API; (b) Free API or Memory-Free API; (c) Enter API or Epoch-Enter API; and (d) Exit API or Epoch-Exit API. The Allocate API acquires a new memory region or allocates memory resources for use by a thread. The Free API marks a previously acquired memory region as inactive or marks memory resources as ready for reclamation or recovery. Reclamation or recovery of memory resources occurs when no more threads can access the memory resources. The Enter API enters an epoch-protected region of code or associates a thread with the current active epoch. The Exit API exits an epoch protected region of code or disassociates a thread from the epoch with which it was associated.

When the caller of epoch-based memory recovery code allocates memory resources, the memory resources enter the active state, meaning that it is actively being used and could be reachable by any thread. The caller of epoch-based memory recovery code is then responsible for ensuring that the memory resources are no longer reachable before calling a Free API, at which point the memory enters the inactive state. At this point, existing threads may still have access to the memory resources, but no new threads will obtain access to the memory resources. The memory resources will be reclaimed or recovered once all threads can no longer access the memory resources.

For an epoch wide state, the epoch-based memory recovery code maintains a small set of shared states. The small set of shared states includes two monotonically increasing counters (e.g., current epoch counter and released epoch counter), a table of per-CPU state, and a reclamation or recovery timer. The current epoch counter, which includes a current epoch counter clock or a CPU cycle clock that monotonically increases, tracks the highest epoch value any thread running on the plurality of CPUs is associated with and/or tracks the current "time" in the system. The release epoch counter, which includes a release epoch counter clock or the CPU cycle clock that monotonically increases, tracks the highest epoch value that no threads are associated with any longer and/or tracks the highest epoch that no longer has any code executing in it. The per-CPU state includes a collection of per-thread states, a list of inactive memory allocations, synchronization primitives, and additional booking data for the per-CPU state. Each thread that is in an epoch-protected region records the current epoch value when the region was entered. An epoch is considered active while one or more threads have that epoch value recorded or associated with them. An epoch-based memory resource can be reclaimed once no threads have a record of that epoch value.

Every execution context (e.g., a thread at passive interrupt request level ("IRQL") or a deferred procedure call ("DPC") running at a dispatch IRQL) is associated with a point in time when execution began (i.e., the value of the current epoch counter or clock at the point where it began execution). An IRQL, as used herein, refers to a hardware-independent manner with which the OS prioritizes interrupts that come from the system's processors. On processor architectures on which the OS runs, hardware generates signals that are sent to an interrupt controller. The interrupt controller sends an interrupt request ("IRQ") to the CPU with a certain priority level, and the CPU sets a mask that causes any other interrupts with a lower priority to be put into a pending state, until the CPU releases control back to the interrupt controller. If a signal comes in at a higher priority, then the current interrupt will be put into a pending state; the CPU sets the interrupt mask to the priority and places any interrupts with a lower priority into a pending state until the CPU finishes handling the new, higher priority interrupt. All memory resources that the execution context could touch during its execution are part of that epoch or epoch value. When the memory resources are no longer needed, they are first made non-reachable (where all pointers to them are removed), after which they are stamped with the current epoch and inserted into a "free list." The timestamp is the point in time when the memory resources transition from visible to non-visible and as such can only be returned to an OS once no active execution context could be using that memory (e.g., when memory timestamp either is less than the release epoch counter value or is less than or equal to the release epoch counter value, depending on the system's definition of release epoch counter value as described above).

In examples, each execution context first calls an Epoch-Enter API prior to accessing any memory or memory resources that are under epoch protection and then calls an Epoch-Exit API once it is done. The call to Epoch-Enter API accepts a pointer to an epoch state object, while the Epoch-Enter API fills out and is passed to the Epoch-Exit API. Each CPU maintains a list of epoch state entries. Access to an epoch CPU entry structure is restricted to the CPU that owns that entry and is performed at the dispatch IRQL. Memory or memory resources are then allocated via calls to a Memory-Allocate API, which returns memory or memory resources with a private header and the memory or memory resources are freed via calls to a Memory-Free API. The private header is then used to track when the memory or memory resources were freed together with removing links or pointers to the memory or memory resources corresponding to epoch values either below the release epoch counter value or equal to or below the release epoch counter value. Once free, the memory or memory resources are stamped with the current epoch value and the current epoch value is atomically incremented. This ensures that the freed memory or memory resources continually maintains the correct epoch value. The memory or memory resources are then enqueued on a per-CPU free list. On epoch exit, the free list is then scanned to locate entries whose timestamp is older than the release epoch. These entries are then returned to the OS.

In some aspects, a series of operations performed by each CPU in a sequence of CPUs includes computing the minimum epoch value of all threads running on the CPU, rearming a timer if needed and sending a message to the next CPU in the sequence regarding the computed minimum epoch value, sending a message indicating that compute minimum epoch value is complete, permitting the timer to run, removing the epoch state from a per-CPU thread list, and when rundown is in progress, processing of messages is stopped. If a CPU is the last CPU in the sequence of CPUs, then the release epoch counter is set to the minimum epoch value and a message is sent to the first CPU to rearm the timer. All entries from the per-CPU free list that have an epoch that is below the release epoch counter value are removed from the per-CPU free list. The timer is rearmed if needed, and a message is sent to the next CPU. If the next CPU is the last CPU, then the process is stopped. Epoch-Exit API is called on behalf of the other CPUs. A flag indicating epoch CPU entry rundown in progress is set to true and a message regarding the flag state is sent to the next CPU in the sequence of CPUs. If the next CPU is the last CPU, then the caller of the code is signaled to indicate that the rundown is complete. In some examples, the use of a common clock may lead to contention when the memory state changes (e.g., when memory is freed). In examples, a clock driven by state change may be moved to a clock derived from a hardware clock. A state driven clock may be used instead of using a query performance counter and its kernel equivalent, which may be more costly to use.

For per-CPU states, a kernel of an OS may not have robust support for thread local storage. To address such a lack, the epoch-based memory recovery code emulates thread local storage using per-CPU state. Each CPU maintains the following state: A table of per-thread epoch states; a list of inactive allocations that are awaiting reclamation or recovery; and/or other per-CPU booking. The initial value of the semaphore is set to one less than the capacity of the per-thread epoch state table. This ensures that a per-thread epoch state is available to a thread executing at IRQL being equal to a dispatch level, and permits a thread where IRQL is less than the dispatch level to reserve a slot by acquiring the semaphore (or blocking until one becomes available). This approach ensures that Epoch-Enter API does not fail during low resources.

The OS maps not only hardware interrupt levels, but also maps software interrupts, to its internal interrupt table. The mappings in this table are called IRQLs, and a separate IRQL is kept for each processor in a multiprocessor system. The IRQL values are specific to some processor architectures (e.g., x86, IA64, or AMD64 processor architectures), although they can support other CPUs that use a similar interrupt scheme. In examples, asynchronous procedure calls ("APCs"), user threads, and kernel mode operations can be interrupted, and the system runs them at an IRQL lower than the thread scheduler or dispatcher. In some examples, a reclamation timer is a one-shot timer that on expiry computes the global release epoch. The release timer does this by examining each per-CPU's per-thread state and by computing the lowest active epoch. This value represents the oldest epoch that is still active on the system. The released epoch is then the oldest active epoch minus one. In addition, the reclamation timer is also responsible for updating some per-CPU bookkeeping.

Fig. 4 depicts an example method 400 for implementing non-locking recovery of epoch-based memory resources. Method 400 may be performed by a plurality of CPUs, each CPU having executed at least one thread with each thread starting at a first epoch value among a plurality of monotonically increasing epoch values. One or more memory resources of a plurality of memory resources of an epoch-based memory system that are used for the at least one thread are associated with an epoch value among the plurality of monotonically increasing epoch values.

Method 400, at operation 405, includes performing a propose-release-epoch series of tasks. At operation 410, method 400 includes identifying a global minimum epoch value based at least in part on the computed minimum epoch values computed by each of the CPUs among the plurality of CPUs. Method 400 further includes, at operation 415, performing a commit-release-epoch series of tasks.

In some examples, performing the propose-release-epoch series of tasks (at operation 405) includes each CPU, in sequence and/or in parallel, performing the following first tasks (at operation 420). The first tasks (at operation 420) include disabling interrupts on the CPU until computation of its minimum epoch value has been completed (at operation 425). In examples, disabling interrupts on one CPU is independent of, and avoids locking or interlocking, other CPUs among the plurality of CPUs from performing their own tasks. In some examples, disabling interrupts on each CPU includes disabling interrupts used by a dispatcher portion of a kernel that switches between threads for the CPU. The first tasks (at operation 420) further include computing its minimum epoch value of all active threads running on it (at operation 430). In examples, the first tasks (at operation 420) further include computing a cumulative minimum epoch value (at operation 435). In the cases where the plurality of CPUs includes a first CPU through a last CPU in a sequence of CPUs, each CPU computes, in sequence from the first CPU through the last CPU, the cumulative minimum epoch value based on its computed minimum epoch value and based on at least one of a cumulative minimum epoch value as sent in a message by a preceding CPU in the sequence of CPUs or the computed minimum epoch value corresponding to each preceding CPU in the sequence of CPUs. In the cases where two or more CPUs of the plurality of CPUs concurrently perform the propose-release-epoch series of tasks, each CPU among the two or more CPUs concurrently computes the cumulative minimum epoch value based on its computed minimum epoch value and based on at least one of a cumulative minimum epoch value as sent in a message by at least one preceding CPU (if any) among other CPUs of the plurality of CPUs or the computed minimum epoch value corresponding to each preceding CPU (if any) among the other CPUs. The first tasks (at operation 420) further include sending a first message including at least one of its computed minimum epoch value or the cumulative minimum epoch value to at least one other CPU among the plurality of CPUs (at operation 440), where, in the cases with the sequence of CPUs, the first message is sent to a next CPU in the sequence of CPUs from the first CPU to the last CPU. The first tasks (at operation 420) further include enabling interrupts on the CPU (at operation 445).

In examples, performing the commit-release-epoch series of tasks (at operation 415) includes each CPU, in sequence and/or in parallel, performing the following second tasks (at operation 450). The second tasks (at operation 450) include initiating a release process for memory resources associated with epoch values below the global minimum epoch value (at operation 455) and forwarding the global minimum epoch value to the at least one other CPU among the plurality of CPUs (at operation 460), where, in the cases with the sequence of CPUs, the global minimum epoch value is forwarded to the next CPU in the sequence of CPUs.

In some examples, initiating the release process for memory resources (at operation 455) includes removing, by each CPU in sequence and/or in parallel, pointers to the memory resources corresponding to epoch values below the global minimum epoch value (at operation 465); listing the memory resources on a free list (at operation 470); and arming a timer for triggering subsequent release of memory resources listed on the free list (at operation 475). In examples, initiating the release process for memory resources (at operation 455) includes or further includes updating a current epoch counter and a release epoch counter (at operation 480). In some cases, the current epoch counter is updated to a current epoch counter value to correspond to a global maximum epoch value among the plurality of CPUs. In some instances, the release epoch counter is updated to a release epoch counter value to correspond to one of the global minimum epoch value or an epoch value that is one less than the global minimum epoch value. In some examples, epoch values increase based on one of timer activation, specific events, or when memory is reclaimed.

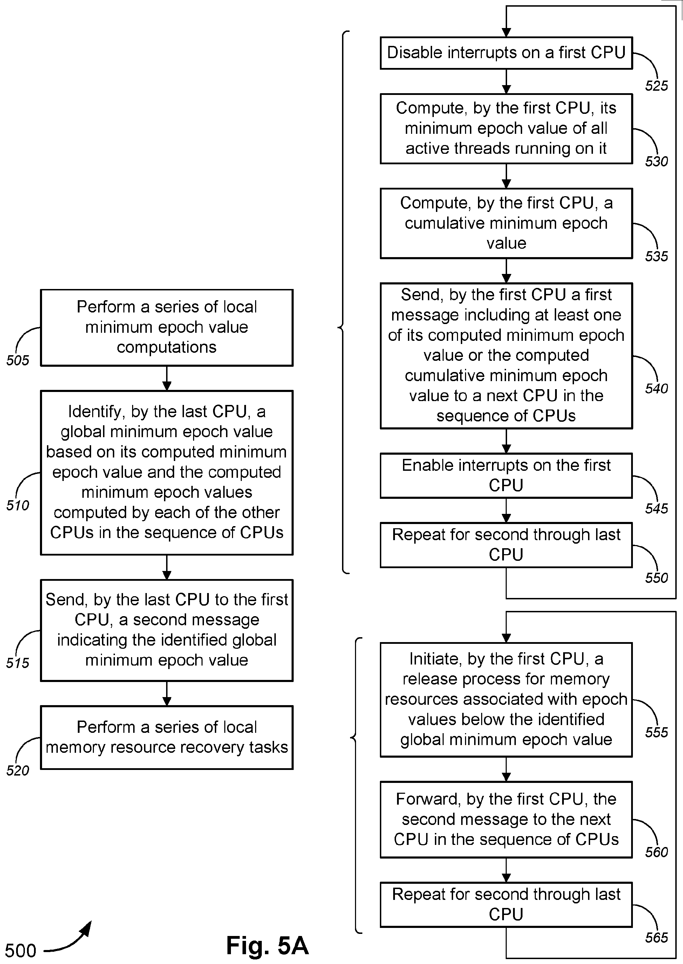

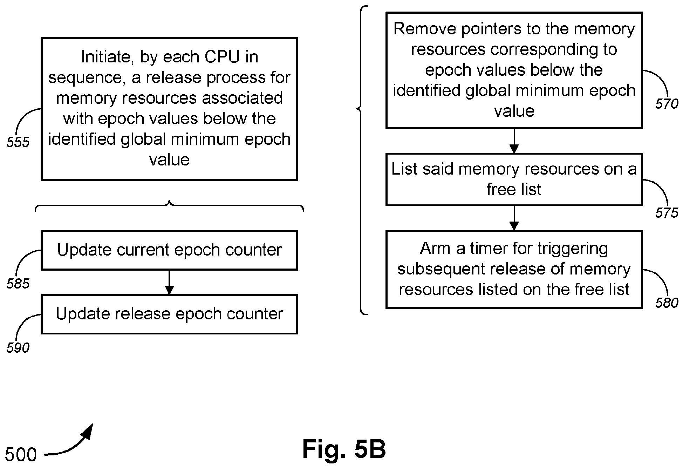

Figs. 5A and 5B depict another example method 500 for implementing non-locking recovery of epoch-based memory resources. Method 500 may be performed by a computing system including a plurality of CPUs. The plurality of CPUs includes a first CPU through a last CPU. The plurality of CPUs executes threads each starting at an epoch value among a plurality of monotonically increasing epoch values for an epoch-based memory system. One or more memory resources of the epoch-based memory system that are used for each thread are associated with one epoch value among the plurality of monotonically increasing epoch values.

With reference to Fig. 5A, at operation 505, method 500 includes performing a series of local minimum epoch value computations. Method 500 further includes, at operation 510, identifying, by the last CPU, a global minimum epoch value based on its computed minimum epoch value and the computed minimum epoch values computed by each of the other CPUs in the sequence of CPUs. Method 500, at operation 515, includes sending, by the last CPU to the first CPU, a second message indicating the global minimum epoch value. Method 500 further includes performing a series of local memory resource recovery tasks among the plurality of CPUs (at operation 520).

In examples, performing the series of local minimum epoch value computations (at operation 505) includes disabling interrupts on the first CPU (at operation 525); and computing, by the first CPU, a minimum epoch value of all active threads running on the first CPU (at operation 530). In some examples, performing the series of local minimum epoch value computations (at operation 505) further includes computing, by the first CPU, a cumulative minimum epoch value (at operation 535), which would correspond to the computed minimum epoch value for the first CPU. At operation 540, performing the series of local minimum epoch value computations (at operation 505) further includes sending, by the first CPU, a first message to a next CPU in a sequence of CPUs from the first CPU to the last CPU among the plurality of CPUs, the first message including the computed minimum epoch value with which at least one active thread (of the first CPU) that is accessing corresponding memory resources is associated. Performing the series of local minimum epoch value computations (at operation 505) further includes enabling interrupts on the first CPU (at operation 545). Performing the series of local minimum epoch value computations (at operation 505) further includes repeating the processes at operations 525-545 for each of the second CPU through the last CPU (at operation 550). In some cases, the first CPU may skip computing the cumulative minimum epoch value (at operation 535). For each of the second through last CPUs, computing the cumulative minimum epoch value (at operation 535) may be based on its computed minimum epoch value and based on at least one of a cumulative minimum epoch value as sent in a message by a preceding CPU in the sequence of CPUs or the computed minimum epoch value corresponding to each preceding CPU in the sequence of CPUs. For each of the second through last CPUs, sending the first message (at operation 540) includes sending at least one of a message indicating the cumulative minimum epoch value of CPUs in the sequence of CPUs up to the CPU (or current CPU in iteration of the sequence of CPUs) or one or more messages indicating the computed minimum epoch value corresponding to the CPU and each preceding CPU in the sequence of CPUs.

In some examples, performing the series of local memory resource recovery tasks (at operation 520) includes initiating, by the first CPU, a release process for memory resources associated with epoch values below the global minimum epoch value (at operation 555); and forwarding, by the first CPU, the second message to the next CPU (in this case, the second CPU) in the sequence of CPUs (at operation 560). Performing the series of local memory resource recovery tasks (at operation 520) further includes repeating the processes at operations 555 and 560 for each of the second CPU through the last CPU (at operation 565).

Referring to Fig. 5B, initiating the release process for memory resources (at operation 555) includes, by each CPU in sequence, removing pointers to the memory resources corresponding to epoch values below the global minimum epoch value (at operation 570); listing the memory resources on a free list (at operation 575); and arming a timer for triggering subsequent release of memory resources listed on the free list (at operation 580). In examples, initiating the release process for memory resources (at operation 555) includes (or further includes) each CPU in sequence performing at least one of: updating a current epoch counter value to correspond to a global maximum epoch value among the plurality of CPUs; and/or updating a release epoch counter value to correspond to one of the global minimum epoch value or an epoch value that is one less than the global minimum epoch value.

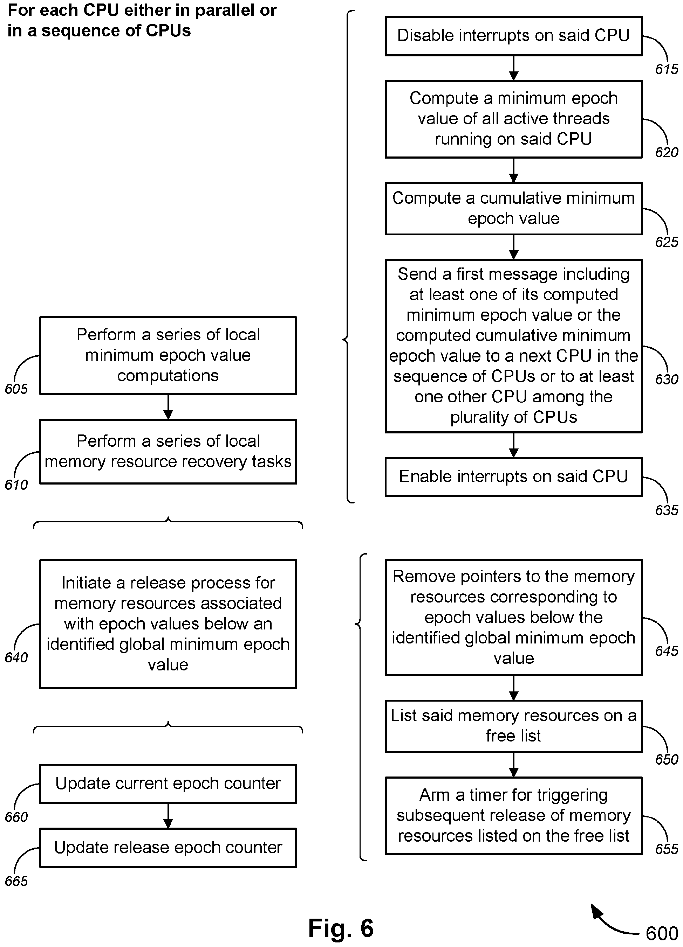

Fig. 6 depicts yet another example method 600 for implementing non-locking recovery of epoch-based memory resources. Method 600 may be performed either by one CPU in a sequence of CPUs from a first CPU through a last CPU among a plurality of CPUs or by one CPU among two or more CPUs of the plurality of CPUs, each CPU among the plurality of CPU executing at least one thread with each thread starting at a first epoch value among a plurality of monotonically increasing epoch values. One or more memory resources of an epoch-based memory system that are used for the at least one thread are associated with the first epoch value among the plurality of monotonically increasing epoch values.

Method 600 includes, at operation 605, performing a series of local minimum epoch value computations. At operation 610, method 600 includes performing a series of local memory resource recovery tasks. In some examples, performing the series of local minimum epoch value computations (at operation 605) includes disabling interrupts on the CPU (at operation 615). In examples, disabling interrupts on one CPU is independent of, and avoids locking, other CPUs among the plurality of CPUs from performing their own tasks. Performing the series of local minimum epoch value computations (at operation 605) includes computing a minimum epoch value of all active threads running on the CPU (at operation 620). Performing the series of local minimum epoch value computations (at operation 605) includes computing a cumulative minimum epoch value (at operation 625). In the cases where the plurality of CPUs includes a first CPU through a last CPU in a sequence of CPUs, the CPU computes, in its sequence from the first CPU through the last CPU, the cumulative minimum epoch value based on its computed minimum epoch value and based on at least one of a cumulative minimum epoch value as sent in a message by a preceding CPU in the sequence of CPUs or the computed minimum epoch value corresponding to each preceding CPU in the sequence of CPUs. In the cases where two or more CPUs of the plurality of CPUs concurrently perform the series of local minimum epoch value computations, the CPU computes, concurrently with other CPUs among the two or more CPUs, the cumulative minimum epoch value based on its computed minimum epoch value and based on at least one of a cumulative minimum epoch value as sent in a message by at least one preceding CPU (if any) among other CPUs of the plurality of CPUs or the computed minimum epoch value corresponding to each preceding CPU (if any) among the other CPUs. Performing the series of local minimum epoch value computations (at operation 605) includes sending a first message to one of a next CPU in a sequence of CPUs from the first CPU to the last CPU or at least one other CPU among the plurality of CPUs (at operation 630), the first message including at least one of its computed minimum epoch value or the cumulative minimum epoch value. Performing the series of local minimum epoch value computations (at operation 605) includes enabling interrupts on the CPU after computation of its minimum epoch value has been completed (at operation 635).

In examples, performing the series of local memory resource recovery tasks (at operation 610) includes initiating a release process for memory resources associated with epoch values below an global minimum epoch value (at operation 640). Initiating the release process for memory resources (at operation 640) includes removing pointers to the memory resources corresponding to epoch values below the global minimum epoch value (at operation 645); listing the memory resources on a free list (at operation 650); and arming a timer for triggering subsequent release of memory resources listed on the free list (at operation 655). In examples, initiating the release process for memory resources (at operation 640) includes (or further includes) updating a current epoch counter value to correspond to a global maximum epoch value among the plurality of CPUs (at operation 660); and/or updating a release epoch counter value to correspond to one of the global minimum epoch value or an epoch value that is one less than the global minimum epoch value (at operation 665).

While the techniques and procedures in methods 400, 500, and 600 are depicted and/or described in a certain order for purposes of illustration, it should be appreciated that certain procedures may be reordered and/or omitted within the scope of various embodiments. Moreover, while the methods 400, 500, and 600 may be implemented by or with (and, in some cases, are described below with respect to) the systems, examples, or embodiments 100, 200, and 300 of Figs. 1, 2, and 3A-3L, respectively (or components thereof), such methods may also be implemented using any suitable hardware (or software) implementation. Similarly, while each of the systems, examples, or embodiments 100, 200, and 300 of Figs. 1, 2, and 3A-3L, respectively (or components thereof), can operate according to the methods 400, 500, and 600 (e.g., by executing instructions embodied on a computer readable medium), the systems, examples, or embodiments 100, 200, and 300 of Figs. 1, 2, and 3A-3L can each also operate according to other modes of operation and/or perform other suitable procedures.

As should be appreciated from the foregoing, the present technology provides multiple technical benefits and solutions to technical problems. For instance, providing for recovery of epoch-based memory resources generally raises multiple technical problems. For instance, one technical problem includes wasting unused memory resources being tied to or associated with no longer active threads running on CPUs. Another technical problem includes stalling or locking (or interlocking) of operations on a plurality of CPUs as each thread is being run on one of the CPUs. Each stall or lock incurs a time cost (e.g., about 110 ns), and compounds with increasing number of CPUs and/or locks (e.g., 10s or 100s of millions of locks per second). The present technology provides for non-locking recovery of epoch-based memory resources. A plurality of CPUs, having executed at least one thread with each thread starting at a first epoch value among a plurality of monotonically increasing epoch values, may perform two loops of tasks, each loop of tasks being performed by each CPU among the plurality of CPUs either in sequence or in parallel. The first loop of tasks includes a propose-release-epoch series of tasks or a series of local minimum epoch value computations, while the second loop of tasks includes a commit-release-epoch series of tasks or a series of local memory resource recovery tasks. The first loop of tasks includes each CPU computing its minimum epoch value of all active threads running on it and sending the computed minimum epoch value to at least one other CPU among the plurality of CPUs. At least one of the plurality of CPUs is used to identify a global minimum epoch value based at least in part on the computed minimum epoch values computed by each of the CPUs. The second loop of tasks includes each CPU initiating a release process for memory resources associated with epoch values below the global minimum epoch value and forwarding the global minimum epoch value to the at least one other CPU among the plurality of CPUs.

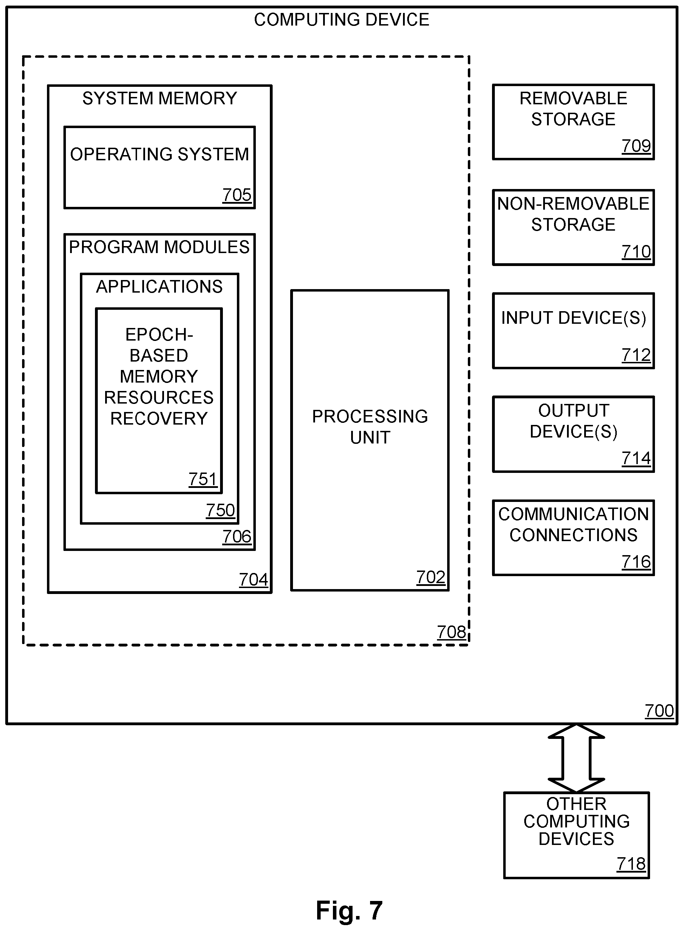

Fig. 7 depicts a block diagram illustrating physical components (i.e., hardware) of a computing device 700 with which examples of the present disclosure may be practiced. The computing device components described below may be suitable for a client device implementing the non-locking recovery of epoch-based memory resources, as discussed above. In a basic configuration, the computing device 700 may include at least one processing unit 702 and a system memory 704. The processing unit(s) (e.g., processors) may be referred to as a processing system. Depending on the configuration and type of computing device, the system memory 704 may include volatile storage (e.g., random access memory), non-volatile storage (e.g., read-only memory), flash memory, or any combination of such memories. The system memory 704 may include an operating system 705 and one or more program modules 706 suitable for running software applications 750, such as epoch-based memory resources recovery 751, to implement one or more of the systems or methods described above.

The operating system 705, for example, may be suitable for controlling the operation of the computing device 700. Furthermore, aspects of the invention may be practiced in conjunction with a graphics library, other operating systems, or any other application program and is not limited to any particular application or system. This basic configuration is illustrated in Fig. 7 by those components within a dashed line 708. The computing device 700 may have additional features or functionalities. For example, the computing device 700 may also include additional data storage devices (which may be removable and/or non-removable), such as, for example, magnetic disks, optical disks, or tape. Such additional storage is illustrated in Fig. 7 by a removable storage device(s) 709 and a non-removable storage device(s) 710.

As stated above, a number of program modules and data files may be stored in the system memory 704. While executing on the processing unit 702, the program modules 706 may perform processes including one or more of the operations of the method(s) as illustrated in Figs. 4-6, or one or more operations of the system(s) and/or apparatus(es) as described with respect to Figs. 1-3L, or the like. Other program modules that may be used in accordance with examples of the present disclosure may include applications such as electronic mail and contacts applications, word processing applications, spreadsheet applications, database applications, slide presentation applications, drawing or computer-aided application programs, artificial intelligence ("AI") applications and machine learning ("ML") modules on cloud-based systems, etc.

Furthermore, examples of the present disclosure may be practiced in an electrical circuit including discrete electronic elements, packaged or integrated electronic chips containing logic gates, a circuit utilizing a microprocessor, or on a single chip containing electronic elements or microprocessors. For example, examples of the present disclosure may be practiced via a system-on-a-chip ("SOC") where each or many of the components illustrated in Fig. 7 may be integrated onto a single integrated circuit. Such an SOC device may include one or more processing units, graphics units, communications units, system virtualization units and various application functionalities all of which may be integrated (or "burned") onto the chip substrate as a single integrated circuit. When operating via an SOC, the functionality, described herein, with respect to generating suggested queries, may be operated via application-specific logic integrated with other components of the computing device 700 on the single integrated circuit (or chip). Examples of the present disclosure may also be practiced using other technologies capable of performing logical operations such as, for example, AND, OR, and NOT, including mechanical, optical, fluidic, and/or quantum technologies.

The computing device 700 may also have one or more input devices 712 such as a keyboard, a mouse, a pen, a sound input device, and/or a touch input device, etc. The output device(s) 714 such as a display, speakers, and/or a printer, etc. may also be included. The aforementioned devices are examples and others may be used. The computing device 700 may include one or more communication connections 716 allowing communications with other computing devices 718. Examples of suitable communication connections 716 include radio frequency ("RF") transmitter, receiver, and/or transceiver circuitry; universal serial bus ("USB"), parallel, and/or serial ports; and/or the like.

The term "computer readable media" as used herein may include computer storage media. Computer storage media may include volatile and nonvolatile, and/or removable and non-removable, media that may be implemented in any method or technology for storage of information, such as computer readable instructions, data structures, or program modules. The system memory 704, the removable storage device 709, and the non-removable storage device 710 are all computer storage media examples (i.e., memory storage). Computer storage media may include random access memory ("RAM"), read-only memory ("ROM"), electrically erasable programmable read-only memory ("EEPROM"), flash memory or other memory technology, compact disk read-only memory ("CD-ROM"), digital versatile disks ("DVD") or other optical storage, magnetic cassettes, magnetic tape, magnetic disk storage or other magnetic storage devices, or any other article of manufacture which can be used to store information and which can be accessed by the computing device 700. Any such computer storage media may be part of the computing device 700. Computer storage media may be non-transitory and tangible, and computer storage media do not include a carrier wave or other propagated data signal.

Communication media may be embodied by computer readable instructions, data structures, program modules, or other data in a modulated data signal, such as a carrier wave or other transport mechanism, and may include any information delivery media. The term "modulated data signal" may describe a signal that has one or more characteristics that are set or changed in such a manner as to encode information in the signal. By way of example, communication media may include wired media such as a wired network or direct-wired connection, and wireless media such as acoustic, RF, infrared, and other wireless media.

The present disclosure relates to systems and methods for non-locking recovery of memory resources according to at least the examples provided in the sections below:
Clause 1. A system, comprising: an epoch-based memory system comprising a plurality of memory resources; and a plurality of central processing units ("CPUs"), each CPU having executed a thread with each thread starting at a first epoch value among a plurality of monotonically increasing epoch values, wherein a memory resource of the plurality of memory resources that is used for the thread is associated with an epoch value among the plurality of monotonically increasing epoch values, wherein the plurality of CPUs is configured to: perform a propose-release-epoch series of tasks comprising: each CPU computing its minimum epoch value of all active threads running on it and sending a first message including its computed minimum epoch value to another CPU among the plurality of CPUs; identify a global minimum epoch value based at least in part on the computed minimum epoch values computed by each of the CPUs among the plurality of CPUs; and perform a commit-release-epoch series of tasks comprising: each CPU initiating a release process for memory resources associated with epoch values below the global minimum epoch value and forwarding the global minimum epoch value to the other CPU among the plurality of CPUs.
Clause 2. The system of clause 1, wherein performing the propose-release-epoch series of tasks further comprises: prior to computing its minimum epoch value, each CPU, in sequence and/or in parallel, disabling interrupts on the CPU until computation of its minimum epoch value has been completed, wherein disabling interrupts on one CPU is independent of, and avoids locking, other CPUs among the plurality of CPUs from performing their own tasks; and enabling interrupts on the CPU after computation of its minimum epoch value has been completed.
Clause 3. The system of clause 1 or clause 2, wherein the plurality of CPUs comprises a first CPU through a last CPU in a sequence of CPUs, wherein performing the propose-release-epoch series of tasks further comprises: after computing its minimum epoch value, each CPU, in sequence from the first through last CPU, computing a cumulative minimum epoch value based on its computed minimum epoch value and based on at least one of a cumulative minimum epoch value as sent in a message by a preceding CPU in the sequence of CPUs or the computed minimum epoch value corresponding to each preceding CPU in the sequence of CPUs; wherein sending the first message comprises sending at least one of a message indicating the cumulative minimum epoch value of CPUs in the sequence of CPUs up to the CPU or a message indicating the computed minimum epoch value corresponding to the CPU and each preceding CPU in the sequence of CPUs; wherein identifying the global minimum epoch value is based on the computed minimum epoch value of the last CPU and the cumulative minimum epoch value of CPUs up to a next-to-last CPU in the sequence of CPUs.
Clause 4. The system of any preceding clause, wherein performing the propose-release-epoch series of tasks further comprises: after computing its minimum epoch value, each CPU among two or more CPUs of the plurality of CPUs concurrently computing a cumulative minimum epoch value based on its computed minimum epoch value and based on at least one of a cumulative minimum epoch value as sent in a message by a preceding CPU among other CPUs of the plurality of CPUs or the computed minimum epoch value corresponding to each preceding CPU among the other CPUs; wherein sending the first message comprises sending at least one of a message indicating the cumulative minimum epoch value of preceding CPUs up to the CPU or a message indicating the computed minimum epoch value corresponding to the CPU and each preceding CPU; wherein identifying the global minimum epoch value is based on the computed minimum epoch value of a last CPU among the plurality of CPUs and the cumulative minimum epoch value of CPUs up to a next-to-last CPU among the plurality of CPUs.
Clause 5. The system of any preceding clause, wherein each CPU computing its minimum epoch value of all active threads running on it comprises each CPU, in sequence and/or in parallel, computing a maximum epoch value, below a current epoch value, with which no active threads are associated for the CPU, wherein the maximum epoch value further indicates that no active threads are associated with epoch values below the maximum epoch value.
Clause 6. The system of any preceding clause, wherein initiating, by each CPU, the release process comprises: removing, by each CPU in sequence and/or in parallel, pointers to the memory resources corresponding to epoch values below the global minimum epoch value; listing the memory resources on a free list; and arming a timer for triggering subsequent release of memory resources listed on the free list.
Clause 7. The system of any preceding clause, wherein the commit-release-epoch series of tasks further comprises: updating, by each CPU in sequence and/or in parallel, a current epoch counter value to correspond to a global maximum epoch value among the plurality of CPUs; or updating, by each CPU in sequence and/or in parallel, a release epoch counter value to correspond to one of the global minimum epoch value or an epoch value that is one less than the global minimum epoch value.
Clause 8. The system of any preceding clause, wherein epoch values increase based on timer activation, specific events, or when memory is reclaimed.
Clause 9. A computer-implemented method, comprising: performing a series of local minimum epoch value computations within a computing system comprising a plurality of central processing units ("CPUs"), wherein the plurality of CPUs comprises a first CPU through a last CPU, wherein the plurality of CPUs executes threads each starting at an epoch value among a plurality of monotonically increasing epoch values for an epoch-based memory system, wherein memory resources of the epoch-based memory system that are used for each thread are associated with one epoch value among the plurality of monotonically increasing epoch values, wherein the series of local minimum epoch value computations comprises: computing, by the first CPU, a minimum epoch value of all active threads running on the first CPU; sending, by the first CPU, a first message to a next CPU in a sequence of CPUs from the first CPU to the last CPU among the plurality of CPUs, the first message including, for the first CPU, the computed minimum epoch value with which an active thread that is accessing corresponding memory resources is associated; and repeating the computing and sending processes for each of a second through the last CPU in the sequence of CPUs, wherein the first message further includes the computed minimum epoch value corresponding to each preceding CPU in the sequence of CPUs; identifying, by the last CPU, a global minimum epoch value based on its computed minimum epoch value and the computed minimum epoch values computed by each of the other CPUs in the sequence of CPUs; sending, by the last CPU to the first CPU, a second message indicating the global minimum epoch value; and performing a series of local memory resource recovery tasks among the plurality of CPUs, wherein the series of local memory resource recovery tasks comprises: initiating, by the first CPU, a release process for memory resources associated with epoch values below the global minimum epoch value; forwarding, by the first CPU, the second message to the next CPU in the sequence of CPUs; and repeating the initiating and forwarding processes for each of the second through the last CPU in the sequence of CPUs.
Clause 10. The computer-implemented method of clause 9, wherein the series of local minimum epoch value computations further comprises: prior to each CPU, in the sequence of CPUs, computing its minimum epoch value, disabling interrupts on the CPU until computation of its minimum epoch value has been completed, wherein disabling interrupts on one CPU is independent of, and avoids locking, other CPUs in the sequence of CPUs from performing their own tasks, wherein disabling interrupts on each CPU comprises disabling interrupts used by a dispatcher portion of a kernel that switches between threads for the CPU; and enabling interrupts on the CPU after computation of its minimum epoch value has been completed.
Clause 11. The computer-implemented method of clause 9 or clause 10, wherein the series of local minimum epoch value computations further comprises: after computing its minimum epoch value, computing, by each CPU in sequence, a cumulative minimum epoch value based on its computed minimum epoch value and based on at least one of a cumulative minimum epoch value as sent in a message by a preceding CPU in the sequence of CPUs or the computed minimum epoch value corresponding to each preceding CPU in the sequence of CPUs; wherein sending the first message comprises sending at least one of a message indicating the cumulative minimum epoch value of CPUs in the sequence of CPUs up to the CPU or a message indicating the computed minimum epoch value corresponding to the CPU and each preceding CPU in the sequence of CPUs; wherein identifying the global minimum epoch value is based on the computed minimum epoch value of the last CPU and the cumulative minimum epoch value of CPUs up to a next-to-last CPU in the sequence of CPUs.
Clause 12. The computer-implemented method of any of clauses 9-11, wherein computing, by each CPU, the minimum epoch value of all active threads running on the CPU comprises computing, by each CPU, a maximum epoch value, below a current epoch value, with which no active threads are associated for the CPU, wherein the maximum epoch value further indicates that no active threads are associated with epoch values below the maximum epoch value.
Clause 13. The computer-implemented method of any of clauses 9-12, wherein initiating, by each CPU, the release process comprises: removing, by each CPU in sequence, pointers to the memory resources corresponding to epoch values below the global minimum epoch value; listing the memory resources on a free list; and arming a timer for triggering subsequent release of memory resources listed on the free list.
Clause 14. The computer-implemented method of any of clauses 9-13, wherein the series of local memory resource recovery tasks further comprises at least one of: updating, by each CPU in sequence, a current epoch counter value to correspond to a global maximum epoch value among the plurality of CPUs; or updating, by each CPU in sequence, a release epoch counter value to correspond to one of the global minimum epoch value or an epoch value that is one less than the global minimum epoch value.
Clause 15. The computer-implemented method of any of clauses 9-14, wherein epoch values increase based on one of timer activation, specific events, or when memory is reclaimed.
Clause 16. A system, comprising: a central processing unit ("CPU") among a plurality of CPUs, each CPU having executed a thread starting at a first epoch value among a plurality of monotonically increasing epoch values, wherein memory resources of an epoch-based memory system that are used for the thread are associated with the first epoch value; and memory coupled to the CPU, the memory comprising computer executable instructions that, when executed by the CPU, causes the CPU to perform operations comprising: performing a series of local minimum epoch value computations comprising: computing a minimum epoch value of all active threads running on the CPU; and sending a first message to another CPU among the plurality of CPUs, the first message including the computed minimum epoch value with which an active thread that is accessing corresponding memory resources is associated; and performing a series of local memory resource recovery tasks comprising: initiating a release process for memory resources associated with epoch values below an global minimum epoch value that is based on computed minimum epoch values by each of the plurality of CPUs.
Clause 17. The system of clause 16, wherein the operations further comprise: prior to computing its minimum epoch value, disabling interrupts on the CPU until computation of its minimum epoch value has been completed, wherein disabling interrupts on one CPU is independent of, and avoids locking, other CPUs among the plurality of CPUs from performing their own tasks; and enabling interrupts on the CPU after computation of its minimum epoch value has been completed.
Clause 18. The system of clause 16 or clause 17, wherein the plurality of CPUs comprises a first CPU through a last CPU in a sequence of CPUs, wherein the series of local minimum epoch value computations further comprises: after computing its minimum epoch value, computing a cumulative minimum epoch value based on its computed minimum epoch value and based on at least one of a cumulative minimum epoch value as sent in a message by a preceding CPU in the sequence of CPUs or the computed minimum epoch value corresponding to each preceding CPU in the sequence of CPUs; wherein sending the first message comprises sending at least one of a message indicating the cumulative minimum epoch value of CPUs in the sequence of CPUs up to the CPU or a message indicating the computed minimum epoch value corresponding to the CPU and each preceding CPU in the sequence of CPUs; wherein the CPU is the last CPU, and wherein the operations further comprises: identifying a global minimum epoch value is based on the computed minimum epoch value of the last CPU and the cumulative minimum epoch value of CPUs up to a next-to-last CPU in the sequence of CPUs.
Clause 19. The system of any of clauses 16-18, wherein two or more CPUs among the plurality of CPUs each concurrently performs the operations, wherein the series of local minimum epoch value computations further comprises: after computing its minimum epoch value, computing, concurrent with other CPUs among the two or more CPUs, a cumulative minimum epoch value based on its computed minimum epoch value and based on at least one of a cumulative minimum epoch value as sent in a message by a preceding CPU among other CPUs of the plurality of CPUs or the computed minimum epoch value corresponding to each preceding CPU among the other CPUs; wherein sending the first message comprises sending at least one of a message indicating the cumulative minimum epoch value of preceding CPUs up to the CPU or a message indicating the computed minimum epoch value corresponding to the CPU and each preceding CPU; wherein the CPU is one of a last CPU, and wherein the operations further comprises: identifying a global minimum epoch value is based on the computed minimum epoch value of the last CPU among the plurality of CPUs and the cumulative minimum epoch value of CPUs up to a next-to-last CPU among the plurality of CPUs.
Clause 20. The system of any of clauses 16-19, wherein initiating the release process comprises: removing pointers to the memory resources corresponding to epoch values below the global minimum epoch value; listing the memory resources on a free list; and arming a timer for triggering subsequent release of memory resources listed on the free list.
Clause 21. Systems and methods are provided for implementing non-locking recovery of epoch-based memory resources. A plurality of CPUs, having executed a thread(s) with each thread starting at an epoch value among a plurality of monotonically increasing epoch values, may perform sets of tasks, each set being performed by each CPU either in sequence or in parallel. The first set of tasks includes each CPU computing its minimum epoch value of all active threads running on it and sending the computed minimum epoch value to at least one other CPU. At least one CPU identifies a global minimum epoch value based at least in part on the computed minimum epoch values computed by each CPU. The second set of tasks includes each CPU initiating a release process for memory resources associated with epoch values below the global minimum epoch value and forwarding the global minimum epoch value to another CPU(s).

In this detailed description, wherever possible, the same reference numbers are used in the drawing and the detailed description to refer to the same or similar elements. In some instances, a sub-label is associated with a reference numeral to denote one of multiple similar components. When reference is made to a reference numeral without specification to an existing sub-label, it is intended to refer to all such multiple similar components. In some cases, for denoting a plurality of components, the suffixes "a" through "n" may be used, where *n* denotes any suitable non-negative integer number (unless it denotes the number 14, if there are components with reference numerals having suffixes "a" through "m" preceding the component with the reference numeral having a suffix "n"), and may be either the same or different from the suffix "n" for other components in the same or different figures. For example, for component #1 X05a-X05n, the integer value of *n* in X05n may be the same or different from the integer value of *n* in X10n for component #2 X10a-X10n, and so on. In other cases, other suffixes (e.g., *s, t, u, v, w, x, y,* and/or z) may similarly denote non-negative integer numbers that (together with *n* or other like suffixes) may be either all the same as each other, all different from each other, or some combination of same and different (e.g., one set of two or more having the same values with the others having different values, a plurality of sets of two or more having the same value with the others having different values).

Unless otherwise indicated, all numbers used herein to express quantities, dimensions, and so forth used should be understood as being modified in all instances by the term "about." In this application, the use of the singular includes the plural unless specifically stated otherwise, and use of the terms "and" and "or" means "and/or" unless otherwise indicated. Moreover, the use of the term "including," as well as other forms, such as "includes" and "included," should be considered non-exclusive. Also, terms such as "element" or "component" encompass both elements and components including one unit and elements and components that include more than one unit, unless specifically stated otherwise.

In this detailed description, for the purposes of explanation, numerous specific details are set forth to provide a thorough understanding of the described embodiments. It will be apparent to one skilled in the art, however, that other embodiments of the present invention may be practiced without some of these specific details. In other instances, certain structures and devices are shown in block diagram form. While aspects of the technology may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the detailed description does not limit the technology, but instead, the proper scope of the technology is defined by the appended claims. Examples may take the form of a hardware implementation, or an entirely software implementation, or an implementation combining software and hardware aspects. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features. The detailed description is, therefore, not to be taken in a limiting sense.

Aspects of the present invention, for example, are described above with reference to block diagrams and/or operational illustrations of methods, systems, and computer program products according to aspects of the invention. The functions and/or acts noted in the blocks may occur out of the order as shown in any flowchart. For example, two blocks shown in succession may in fact be executed substantially concurrently or the blocks may sometimes be executed in the reverse order, depending upon the functionalities and/or acts involved. Further, as used herein and in the claims, the phrase "at least one of element A, element B, or element C" (or any suitable number of elements) is intended to convey any of: element A, element B, element C, elements A and B, elements A and C, elements Band C, and/or elements A, B, and C (and so on).

The description and illustration of one or more aspects provided in this application are not intended to limit or restrict the scope of the invention as claimed in any way. The aspects, examples, and details provided in this application are considered sufficient to convey possession and enable others to make and use the best mode of the claimed invention. The claimed invention should not be construed as being limited to any aspect, example, or detail provided in this application. Regardless of whether shown and described in combination or separately, the various features (both structural and methodological) are intended to be selectively rearranged, included, or omitted to produce an example or embodiment with a particular set of features. Having been provided with the description and illustration of the present application, one skilled in the art may envision variations, modifications, and alternate aspects, examples, and/or similar embodiments falling within the broader aspects of the general inventive concept embodied in this application that do not depart from the broader scope of the claimed invention.

## Claims

1. A system (100), comprising:
an epoch-based memory system (125) comprising a plurality of memory resources (125a... 125p); and
a plurality of central processing units, "CPUs", (105), each CPU having executed a thread (145) with each thread starting at a first epoch value among a plurality of monotonically increasing epoch values, wherein a memory resource of the plurality of memory resources that is used for the thread is associated with an epoch value among the plurality of monotonically increasing epoch values, wherein the plurality of CPUs is configured to:
perform (405) a propose-release-epoch series of tasks comprising:
each CPU computing its minimum epoch value of all active threads running on it and sending a first message including its computed minimum epoch value to another CPU among the plurality of CPUs;
identify (410) a global minimum epoch value based at least in part on the computed minimum epoch values computed by each of the CPUs among the plurality of CPUs; and
perform (415) a commit-release-epoch series of tasks comprising:
each CPU initiating a release process for memory resources associated with epoch values below the global minimum epoch value and forwarding the global minimum epoch value to the other CPU among the plurality of CPUs.

2. The system (100) of claim 1, wherein performing the propose-release-epoch series of tasks further comprises:
prior to computing its minimum epoch value, each CPU, in sequence and/or in parallel, disabling (425) interrupts on the CPU until computation of its minimum epoch value has been completed, wherein disabling interrupts on one CPU is independent of, and avoids locking, other CPUs among the plurality of CPUs from performing their own tasks; and
enabling (445) interrupts on the CPU after computation of its minimum epoch value has been completed.

3. The system (100) of claim 1 or claim 2, wherein the plurality of CPUs comprises a first CPU through a last CPU in a sequence of CPUs, wherein performing the propose-release-epoch series of tasks further comprises:
after computing its minimum epoch value, each CPU, in sequence from the first through last CPU, (435) computing a cumulative minimum epoch value based on its computed minimum epoch value and based on at least one of a cumulative minimum epoch value as sent in a message by a preceding CPU in the sequence of CPUs or the computed minimum epoch value corresponding to each preceding CPU in the sequence of CPUs;
wherein sending the first message comprises sending at least one of a message indicating the cumulative minimum epoch value of CPUs in the sequence of CPUs up to the CPU or a message indicating the computed minimum epoch value corresponding to the CPU and each preceding CPU in the sequence of CPUs;
wherein identifying the global minimum epoch value is based on the computed minimum epoch value of the last CPU and the cumulative minimum epoch value of CPUs up to a next-to-last CPU in the sequence of CPUs.

4. The system (100) of any preceding claim, wherein performing the propose-release-epoch series of tasks further comprises:
after computing its minimum epoch value, each CPU among two or more CPUs of the plurality of CPUs concurrently computing (435) a cumulative minimum epoch value based on its computed minimum epoch value and based on at least one of a cumulative minimum epoch value as sent in a message by a preceding CPU among other CPUs of the plurality of CPUs or the computed minimum epoch value corresponding to each preceding CPU among the other CPUs;
wherein sending the first message comprises sending at least one of a message indicating the cumulative minimum epoch value of preceding CPUs up to the CPU or a message indicating the computed minimum epoch value corresponding to the CPU and each preceding CPU;
wherein identifying the global minimum epoch value is based on the computed minimum epoch value of a last CPU among the plurality of CPUs and the cumulative minimum epoch value of CPUs up to a next-to-last CPU among the plurality of CPUs.

5. The system (100) of any preceding claim, wherein each CPU computing its minimum epoch value of all active threads running on it comprises each CPU, in sequence and/or in parallel, computing a maximum epoch value, below a current epoch value, with which no active threads are associated for the CPU, wherein the maximum epoch value further indicates that no active threads are associated with epoch values below the maximum epoch value.

6. The system (100) of any preceding claim, wherein initiating, by each CPU, the release process comprises:
removing (465), by each CPU in sequence and/or in parallel, pointers to the memory resources corresponding to epoch values below the global minimum epoch value;
listing (470) the memory resources on a free list; and
arming (475) a timer for triggering subsequent release of memory resources listed on the free list.

7. The system (100) of any preceding claim, wherein the commit-release-epoch series of tasks further comprises:
updating (480), by each CPU in sequence and/or in parallel, a current epoch counter value to correspond to a global maximum epoch value among the plurality of CPUs; or
updating (480), by each CPU in sequence and/or in parallel, a release epoch counter value to correspond to one of the global minimum epoch value or an epoch value that is one less than the global minimum epoch value.

8. The system (100) of any preceding claim, wherein epoch values increase based on timer activation, specific events, or when memory is reclaimed.

9. A computer-implemented method, comprising:
performing (505) a series of local minimum epoch value computations within a computing system comprising a plurality of central processing units, "CPUs", wherein the plurality of CPUs comprises a first CPU through a last CPU, wherein the plurality of CPUs executes threads each starting at an epoch value among a plurality of monotonically increasing epoch values for an epoch-based memory system, wherein memory resources of the epoch-based memory system that are used for each thread are associated with one epoch value among the plurality of monotonically increasing epoch values, wherein the series of local minimum epoch value computations comprises:
computing (530), by the first CPU, a minimum epoch value of all active threads running on the first CPU;
sending (540), by the first CPU, a first message to a next CPU in a sequence of CPUs from the first CPU to the last CPU among the plurality of CPUs, the first message including, for the first CPU, the computed minimum epoch value with which an active thread that is accessing corresponding memory resources is associated; and
repeating (550) the computing and sending processes for each of a second through the last CPU in the sequence of CPUs, wherein the first message further includes the computed minimum epoch value corresponding to each preceding CPU in the sequence of CPUs;
identifying (510), by the last CPU, a global minimum epoch value based on its computed minimum epoch value and the computed minimum epoch values computed by each of the other CPUs in the sequence of CPUs;
sending (515), by the last CPU to the first CPU, a second message indicating the global minimum epoch value; and
performing (520) a series of local memory resource recovery tasks among the plurality of CPUs, wherein the series of local memory resource recovery tasks comprises:
initiating (555), by the first CPU, a release process for memory resources associated with epoch values below the global minimum epoch value;
forwarding (560), by the first CPU, the second message to the next CPU in the sequence of CPUs; and
repeating (565) the initiating and forwarding processes for each of the second through the last CPU in the sequence of CPUs.

10. The computer-implemented method of claim 9, wherein the series of local minimum epoch value computations further comprises:
prior to each CPU, in the sequence of CPUs, computing its minimum epoch value, disabling (425) interrupts on the CPU until computation of its minimum epoch value has been completed, wherein disabling interrupts on one CPU is independent of, and avoids locking, other CPUs in the sequence of CPUs from performing their own tasks, wherein disabling interrupts on each CPU comprises disabling interrupts used by a dispatcher portion of a kernel that switches between threads for the CPU; and
enabling (445) interrupts on the CPU after computation of its minimum epoch value has been completed.

11. The computer-implemented method of claim 9 or claim 10, wherein the series of local minimum epoch value computations further comprises:
after computing its minimum epoch value, computing (535), by each CPU in sequence, a cumulative minimum epoch value based on its computed minimum epoch value and based on at least one of a cumulative minimum epoch value as sent in a message by a preceding CPU in the sequence of CPUs or the computed minimum epoch value corresponding to each preceding CPU in the sequence of CPUs;
wherein sending the first message comprises sending at least one of a message indicating the cumulative minimum epoch value of CPUs in the sequence of CPUs up to the CPU or a message indicating the computed minimum epoch value corresponding to the CPU and each preceding CPU in the sequence of CPUs;
wherein identifying the global minimum epoch value is based on the computed minimum epoch value of the last CPU and the cumulative minimum epoch value of CPUs up to a next-to-last CPU in the sequence of CPUs.

12. The computer-implemented method of any of claims 9 - 11, wherein computing, by each CPU, the minimum epoch value of all active threads running on the CPU comprises computing, by each CPU, a maximum epoch value, below a current epoch value, with which no active threads are associated for the CPU, wherein the maximum epoch value further indicates that no active threads are associated with epoch values below the maximum epoch value.

13. The computer-implemented method of any of claims 9 - 12, wherein initiating, by each CPU, the release process comprises:
removing (570), by each CPU in sequence, pointers to the memory resources corresponding to epoch values below the global minimum epoch value;
listing (575) the memory resources on a free list; and
arming (580) a timer for triggering subsequent release of memory resources listed on the free list.

14. The computer-implemented method of any of claims 9 - 13, wherein the series of local memory resource recovery tasks further comprises at least one of:
updating (585), by each CPU in sequence, a current epoch counter value to correspond to a global maximum epoch value among the plurality of CPUs; or
updating (590), by each CPU in sequence, a release epoch counter value to correspond to one of the global minimum epoch value or an epoch value that is one less than the global minimum epoch value.

15. A system (100), comprising:
a central processing unit, "CPU", (702) among a plurality of CPUs, each CPU having executed a thread starting at a first epoch value among a plurality of monotonically increasing epoch values, wherein memory resources of an epoch-based memory system that are used for the thread are associated with the first epoch value; and
memory (704) coupled to the CPU, the memory comprising computer executable instructions that, when executed by the CPU, causes the CPU to perform operations comprising:
performing (505) a series of local minimum epoch value computations comprising:
computing (530) a minimum epoch value of all active threads running on the CPU; and
sending (540) a first message to another CPU among the plurality of CPUs, the first message including the computed minimum epoch value with which an active thread that is accessing corresponding memory resources is associated; and
performing (520) a series of local memory resource recovery tasks comprising:
initiating (555) a release process for memory resources associated with epoch values below a global minimum epoch value that is based on computed minimum epoch values by each of the plurality of CPUs.
